# EUROPEAN PATENT APPLICATION

(11) **EP 4 625 394 A1**
(43) Date of publication of application: **01.10.2025**
(21) Application number: 23894586.9
(22) Date of filing: 21.11.2023
(51) Int. Cl.: G09B 19/00, G06Q 50/20

(54) **INFORMATION PROCESSING DEVICE AND PROGRAM**

(30) Priority: 21.11.2022 JP 2022185893
(71) Applicant: AddNess Inc., Tokyo 160-0004 (JP)
(72) Inventor: MIKAMI, Kota, Tokyo 160-0004 (JP)
(74) Representative: Berggren Oy
(86) International application number: PCT/JP2023/041816
(87) International publication number: WO 2024/111581

(57) **Abstract**

According to the present invention, participants JS who are to participate in a lecture will act spontaneously in accordance with a process shown in a next action quick reference table NA. It is assumed that the participants JS who spontaneously ask a question will advance with the process spontaneously. As a result, a participant management server 1 transmits a progress confirmation message, for confirming whether progress is being made, to the participants JS who have not asked a spontaneous question during a prescribed time period and confirms the status of the participants JS on the basis of a reply to the progress confirmation message. A reminder message is further transmitted to the participants JS who do not reply to the progress confirmation message, and the status of the participants JS is confirmed on the basis of a reply to the reminder message. In a case in which a reply is still not obtained, the participant management server 1 issues a request to a person in charge TS to make an inquiry of the participants JS through contact by telephone.

## Description

### TECHNICAL FIELD

The present invention pertains to an information processing device and a program.

### BACKGROUND ART

There are cases where a process chart in which processes necessary for achieving a goal (objective) are written is created, and a target person is caused to perform work for each process, following the processes written in the created process chart. In such a case, management of the progress of a process is assisted by receiving a work time period and progress information for the process, calculating a progress rate, and outputting the calculated progress rate (for example, refer to Patent Document 1).

### Citation List

### Patent Document

Patent Document 1: Japanese Unexamined Patent Application, Publication No. 2012-58867

### DISCLOSURE OF THE INVENTION

### Problems to be Solved by the Invention

A process chart such as that described above is also used in educational guidance. In educational guidance in which a target person is assumed to be an ordinary person who is not a student of a school or the like, it is necessary to consider that, unlike in a school or the like, the amount of time that can be used by target persons differs. Accordingly, it is difficult to set a time period such as a work time period in advance. It is often the case that an action required of a target person is spontaneous. Even in such educational guidance in which an ordinary person is assumed to be a target person, it is important to more appropriately manage the target person such that it is possible to allow spontaneous actions to continue.

An object of the present invention is to provide an information processing device that enables management of a target person to be more appropriately performed in educational guidance such as where an ordinary person is assumed to be a target person.

### Means for Solving the Problems

An information processing device according to one aspect of the present disclosure is provided with: a query unit configured to cause transmission of a message that includes an input unit for selecting presence or absence of progress for a prescribed process; and a reception unit configured to receive progress information that represents the presence or absence of progress.

### Effects of the Invention

The present invention enables management of a target person to be more appropriately performed in educational guidance in which the target person is assumed to be an ordinary person.

### BRIEF DESCRIPTION OF THE DRAWINGS

FIG. 1 is a view for describing an example of a method of managing a target person by means of an information processing device according to one embodiment of the present invention;
FIG. 2 is a view for describing an example of a depiction of a next action quick reference table;
FIG. 3 is a view for describing an example of a configuration of a network system constructed using a participant management server according to one embodiment of an information processing device according to the present invention;
FIG. 4 is a block view that illustrates an example of a hardware configuration of the participant management server according to one embodiment of the information processing device according to the present invention;
FIG. 5 is a functional block view that illustrates an example of a functional configuration that is realized by the participant management server according to one embodiment of the information processing device according to the present invention;
FIG. 6 is a flow chart that illustrates an example of reminder message transmission support processing; and
FIG. 7 is a flow chart that illustrates an example of answer reception processing.

### PREFERRED MODE FOR CARRYING OUT THE INVENTION

With reference to the drawings, description is given below regarding modes for carrying out the present invention. Note that embodiments described below are purely examples, and the technical scope of the present invention is not limited thereto. The technical scope of the present invention also includes various variations.

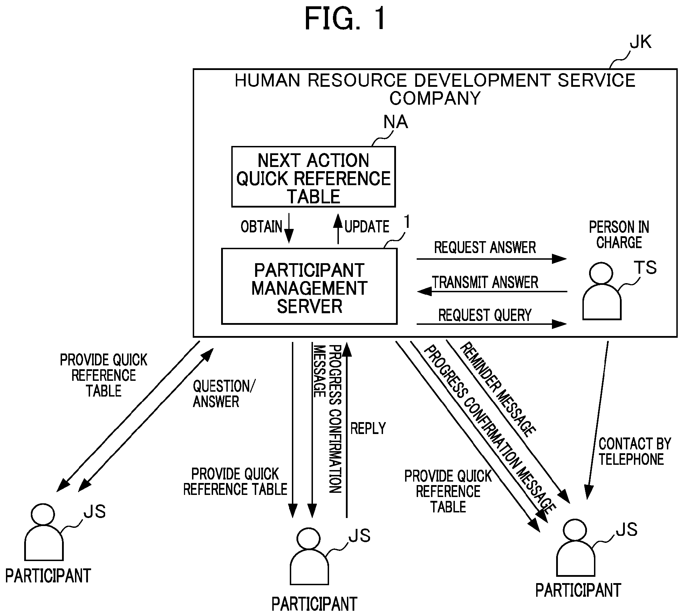

FIG. 1 is a view for describing an example a method of managing a target person by means of an information processing device according to one embodiment of the present invention. In FIG. 1, the information processing device is realized as a participant management server 1. Therefore, the information processing device is also subsequently referred to as the "participant management server 1".

This participant management server 1 is installed by a human resource development service company JK that is different to a school or the like and provides a human resource development service for developing human resources who do business, for example. The human resource development service company JK, for example, establishes one or more courses intended for ordinary people, and provides a human resource development service that treats ordinary people who are participating in an established course as target persons. Therefore, each target person is referred to as a participant JS in FIG. 1. Participant JS is used below with a meaning that indicates a target person, unless otherwise noted. Note that the course is not limited in particular. This course is for training business skills, for example.

In FIG. 1, the participant management server 1 is installed within the human resource development service company JK. However, the installation location of the participant management server 1 is not limited in particular. The participant management server 1 does not need to be owned by the human resource development service company JK. In other words, realization may be by using a cloud service, for example. In addition, an established course is also not limited in particular.

Differing to students at a school or the like, most participants JS who participate in a course are assumed to have little free time, and will have difficulty in ensuring a sizable amount of time. Therefore, a course to be established essentially assumes spontaneous actions by participants JG. A next action quick reference table NA is prepared such that a lecture proceeds in accordance with spontaneous actions. This next action quick reference table NA is for presenting an action that a participant JS should perform next, in accordance with the progress of the lecture. As a result, the next action quick reference table NA is provided to each participant JS, and each participant JS is required to proceed by performing actions that follow the provided next action quick reference table NA. The next action quick reference table NA is abbreviated below as a "quick reference table NA".

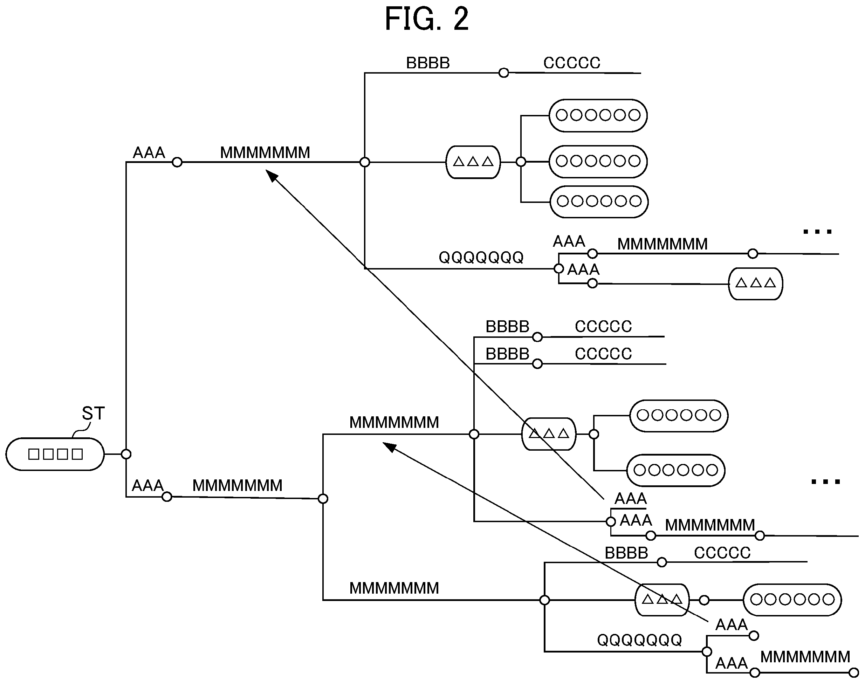

FIG. 2 is a view for describing an example of a depiction of a next action quick reference table. In the quick reference table NA illustrated in the depicted example in FIG. 2, question text for querying state, answer text for the question text, action content text that represents an objective or an action that should be taken, condition text that represents a condition or an indicator, setting text that represents content that should be satisfied by the condition or an indicator that represents the condition text, type description text that represents the type of a document that will serve as a reference, a document name that represents a document that will serve as a reference, or the like are present.

A start point ST is present in the quick reference table NA, and question text is disposed at the start point ST. From the start point ST, the participant JS selects, from among answer text to question text, one instance of answer text that aligns with their own circumstances, and achieves an objective or performs an action represented by action content text disposed at the selected instance of answer text. After achieving a target or performing the action, a selection of whether to perform an action represented by different action content text or whether to achieve an objective, or a selection of one instance of answer text that is for different question text and aligns with their own state is performed. In this manner, while determining their own state by following the quick reference table NA, the participant JS independently performs an action that the participant JS should perform or an action for achieving an objective, and proceeds with the process on their own.

An action that the participant JS should perform next changes due to the state of the participant JS themselves. Therefore, question text is disposed in the quick reference table NA, and causing the participant JS to perform an action considered to be more appropriate for the state of the participant JS as confirmed by the question text is facilitated. As a result, the participant JS can more reliably learn a skill that is necessary for their own state.

Arrows in FIG. 2 represent positions within the quick reference table NA that should be transitioned to next, due to either answer text selected by the participant JS or an action represented by action content text. In FIG. 2, " 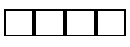 " represents question text disposed at the start point ST, "AAA" represents answer text, "MMMMMMM" represents action content text, "QQQQQQQ" represents question text that is not disposed at the start point ST, "BBBB" represents condition text, "CCCCC" represents setting text, "△△△" represents type description text, and "∘∘∘∘∘∘∘" represents a document name.

The question text is text that can be answered by "affirm" or "deny", or "YES" or "NO", for example. As a result, the answer text is text for "affirm" or "deny", or "YES" or "NO", for example.

Condition text and setting text are associated one-to-one and disposed. Condition text and setting text associated one-to-one are each an action condition that defines an action represented by action content text, or defines an objective that should be achieved. As a result, in order to satisfy each action condition represented by condition text and explanatory text, the participant JS needs to perform the action represented by the action content text or an action for achieving the objective. Note that, each item of text may be selected in accordance with lecture content or the like, and is not limited in particular.

As illustrated in FIG. 2, a document name is associated with type description text. This document name becomes a link button for accessing a document represented by the document name, for example. As a result, it becomes possible for the participant JS to use a click operation with respect to the document name to thereby access a document that is to be a reference.

In this manner, the quick reference table NA is created so as to present question text that should be assessed as well as action content text that corresponds to an answer to the question text, and allow the performance of, as work for a process, an action represented by the presented action content text or an action for achieving an objective that is to be performed. Accordingly, causing the participant JS to refer to the quick reference table NA in order to sequentially progress with processes is facilitated. As a result, even if a participant JS has no or little skill, the participant JS can sequentially learn necessary skills by following the quick reference table NA and sequentially perform, in an autonomous and spontaneous manner, actions that should be performed and are represented by action content text.

The description of FIG. 1 is returned to. The participant management server 1 provides a participant JS who participates in a lecture with a quick reference table NA that is created for that lecture. This provision is actually performed by, for example, transmitting the quick reference table NA to a terminal that the participant JS uses.

As described above, the participant JS determines their own state and performs an action that corresponds to the result of this determination, following the provided quick reference table NA. When the participant JS determines their own state or performs an action, there are cases where a point of doubt, a point that should be confirmed, or the like (these are generically referred to below as "questions") arises. The human resource development service company JK handles a question by the participant JS, and answers the question from the participant JS.

In FIG. 1, a question is transmitted to the participant management server 1, the question is subsequently transmitted via the participant management server 1 to a person in charge TS in the human resource development service company JK, and the person in charge TS is requested to answer the question. An answer created by the person in charge TS to whom the request is made is transmitted to the participant management server 1, and subsequently transmitted to the participant JS via the participant management server 1. As a result, in FIG. 2, it is assumed that questions and answers are transmitted and received in a text-based manner such as with email or chat (direct messages), for example. However, questions and answers are also not limited to text. They may be video, audio, or the like. A method of transmitting and receiving questions and answers is also not limited in particular. For example, it may be that the participant JS can use a telephone or the like to directly question the person in charge TS. For the convenience of the description here, it is assumed that questions and answers are transmitted and received in a text-based manner.

A participant JS who asks a question, even if intermittently, can be treated as continuing actions that follow the quick reference table NA. However, a participant JS who does not ask any questions or for whom a comparatively long amount of time has elapsed since the previous time of asking a question is considered to have the possibility of not continuing to perform actions that follow the quick reference table NA. Therefore, in the present embodiment, a progress confirmation message that targets such a participant JS and is for confirming the presence or absence of progress for a process that follows the quick reference table NA is transmitted. Such a participant JS is distinguished by being referred to below as a "confirmation target participant JS". A progress confirmation message transmission method or the like is not limited in particular, but for convenience, it is assumed here that a progress confirmation message is transmitted by email (or chat).

A progress confirmation message (email) is not illustrated in particular, but, for example, a message querying the presence or absence of progress is disposed, and an input unit for selecting the presence or absence of progress is also disposed. This input unit may be two or more radio buttons, for example. Using this input unit, the confirmation target participant JS to whom the progress confirmation message has been transmitted, is required to select either the presence or absence of progress, and reply. As a result, a reply that includes progress information representing a result of selecting the presence or absence of progress in the input unit is transmitted. Note that a message querying the presence or absence of progress is not limited in particular. As a concrete example, for example, it is possible to give "have you had any kind of trouble?", "do you have any request, etc.?", or the like.

Note that a message that is in a progress confirmation message and is for querying a confirmation target participant JS is assumed to be text here, but may be video, audio, or the like. Video, audio, or the like may be sent as an attachment, but may be played back due to a click operation with respect to a link button or the like. This is similar for reminder messages, which are described below.

The state of the confirmation target participant JS who made the reply can be ascertained from the result of selecting the presence or absence of progress. Therefore, for each confirmation target participant JS, the state of the confirmation target participant JS is ascertained, whereby the human resource development service company JK side will be capable of support that corresponds to the state. For example, it will be possible to also subdivide confirmation target participants JS into people for whom progress is considered to be temporarily delayed, people for whom progress is considered to be delayed as a whole, or the like. Due to such subdivision, focused support for each confirmation target participant JS classification becomes possible.

As illustrated in FIG. 2, documents that will serve as a reference are presented in the quick reference table NA. Therefore, it is possible to estimate progress using documents that the confirmation target participant JS has viewed. Therefore, for each confirmation target participant JS, it is also possible to estimate work for which progress is delayed. Using this estimation, it is also possible to individually give advice regarding work that is estimated to be currently underway, provide documents that will serve as a reference, or the like. In addition, for example, it is also possible to, inter alia, identify work for which the probability of progress becoming delayed is comparatively high or reexamine content for this work. This is because the possibility of the identified work having a comparatively high difficulty level can be considered.

Replying to a progress confirmation message is one item of work for a confirmation target participant JS. The confirmation target participant JS may be caused to feel the necessity of performing this work, and the transmission of the progress confirmation message can be expected to further enable stimulation of motivation for the confirmation target participant JS to proceed with a lecture they are taking.

Therefore, even a confirmation target participant JS who is not progressing with work that follows the quick reference table NA or for whom progress in this work is comparatively slow can be managed in order to enable the confirmation target participant JS to stay motivated such that the confirmation target participant JS can finish a lecture. This means that it is possible to further improve the probability that the confirmation target participant JS can achieve an objective of taking the lecture. As a result, actual results for the lecture will be further improved.

There is no guarantee that all confirmation target participants JS who have received a progress confirmation message will make a reply. Therefore, in the present embodiment, after a progress confirmation message is transmitted, whether a reply to the progress confirmation message has been made is monitored, and a reminder message is caused to be transmitted in a case where a reply could not be confirmed in predefined setting time period (a prescribed time period). A confirmation target participant JS who becomes a target for transmitting a reminder message is distinguished by being referred to as a "reminder target participant JS" below.

Particular illustration is not given, but, for example, a message for querying the presence or absence of a question is disposed in a reminder message, and an answer section (another input unit) for allowing selection of the presence or absence of a question is also disposed therein. This answer section may also be two or more radio buttons. Using this answer section, a reminder target participant JS is required to select one of the presence or absence of a question and reply. A reminder target participant JS who has selected the "presence" of a question may make a reply in which the question has been inputted. As a result, a reply that includes question presence/absence information representing a result of selecting the presence or absence of a question in the answer section is transmitted. In a case where the question presence/absence information represents the "presence" of a question, a reply that includes question presence/absence information as well as question information representing the content of the question is transmitted.

A reminder message differs from a progress confirmation message, and causing the reminder target participant JS to select the presence or absence of a question is facilitated. This is because the selection of the presence or absence of a question is often information that is more required to determine one's own status than the selection of the presence or absence of progress. In order to select the presence or absence of a question, a determination must be made in consideration of one's own status, work content, and the like. Because such consideration is necessary, it can be expected that there will be further stimulation of motivation for the reminder target participant JS to proceed with the lecture that they themselves are taking. A result of selecting the presence or absence of a question as well as a question that is actually asked enable the status, state, or the like of the reminder target participant JS to be ascertained, and thus enable more focused support, similarly to with a progress confirmation message.

A reminder target participant JS who selects "absence" for a question can be considered to at least be in a state where the reminder target participant JS can perform work. Therefore, it is possible to consider that supporting such a reminder target participant JS is unnecessary. In contrast, a reminder target participant JS who selects "presence" for a question can be expected to, upon the question being answered, enter a state of being able to perform work. Therefore, in a case where the "presence" of question is selected, similarly to a spontaneous question by a participant JS, at least a portion of the reply is transmitted to the person in charge TS as a question, and the person in charge TS is requested to answer the question.

As illustrated in FIG. 1, there is no guarantee that all reminder target participants JS who have received a reminder message will make a reply. Therefore, in the present embodiment, similarly to with a progress confirmation message, after a reminder message is transmitted, whether a reply to the reminder message has been made is monitored. As a result, in a case where the reply could not be confirmed in another setting time period that is predefined (another prescribed time period), the person in charge TS is notified to that effect, and the person in charge TS is requested to query the reminder target participant JS for whom a reply could not be confirmed. FIG. 1 indicates that, due to the query request, the person in charge TS contacts the reminder target participant JS by telephone.

In this manner, in the present embodiment, a progress confirmation message and a reminder message are sequentially transmitted to a participant JS for whom performing work cannot be confirmed, whereby the status of the participant JS is automatically confirmed. As a result, for a participant JS for whom motivation to spontaneously perform actions that follow the quick reference table NA has decreased, stimulating the motivation of the participant JS is facilitated. Even with transmission of a reminder message, the person in charge TS is facilitated to support and confirm the status of a participant JS for whom the status could not be confirmed (a reminder target participant JS). Therefore, it is possible to more appropriately perform management such that each participant JS can more reliably finish a lecture, while constraining human resources required to manage the participants JS.

By more appropriately managing each participant JS, the proportion of participants JS who can achieve lecture objectives is kept high. Accordingly, it is possible to facilitate the participants JS having a higher level of satisfaction in the lecture. As a result, while realizing an environment that enables a higher-quality lecture to be provided, the human resource development service company JK will be able to further constrain the cost thereof.

Regardless of whether spontaneously asked by a participant JS, a question and the answer thereto may be useful to other participants JS and not just to the participant JS who asked the question. Therefore, in the present embodiment, a question and an answer thereto are, if necessary, added to quick reference table NA to update the quick reference table NA. The question and the answer thereto are, for example, added to the quick reference table NA in a form that is written together with one of question text, action content text, condition text, and setting text.

Such questions and answers thereto are added to the quick reference table NA, whereby the participant JS will be able to more easily proceed with work that follows the quick reference table NA. Accordingly, the human resource development service company JK will be able to provide higher-quality lectures.

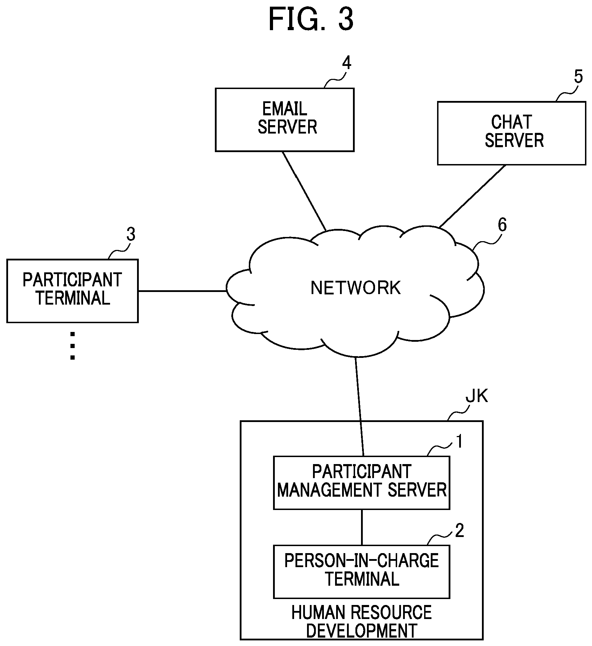

Management of participants JS as described above is performed by the participant management server 1. The participant management server 1 is described in detail below, with reference to FIG. 3 to FIG. 7. FIG. 3 is a view for describing an example of a configuration of a network system constructed using a participant management server according to one embodiment of an information processing device according to the present invention.

Similarly to FIG. 1, the configuration example illustrated in FIG. 3 is constructed in a case where the human resource development service company JK has installed the participant management server 1 within their own company. This network system enables a participant JS to participate in a lecture, and spontaneously proceed with processes (work) defined in the lecture. Accordingly, the network system has a configuration in which the participant management server 1 as well as one or more person-in-charge terminals 2, a plurality of participant terminals 3, an email server 4, and a chat server 5 are connected to a network 6. This configuration example is an example of a configuration, and the configuration of the network system is not limited thereto. For example, the chat server 5 is illustrated as an example of an information processing device that provides a place that enables information other than email to be exchanged, but there are many SNSs (Social Networking Services) that provide such a place. Therefore, the chat server 5 is an example that is illustrated for convenience.

Each person-in-charge terminal 2 is a terminal that is used by a person in charge TS. This person in charge TS is, for example, an employee of the human resource development service company JK. Accordingly, the person-in-charge terminal 2 is illustrated inside the human resource development service company JK. In addition to the internet, the network 6, for example, also encompasses a LAN (Local Area Network), a mobile phone network, or the like. Based on the email server 4 and the chat server 5, a place for exchanging messages is provided. The email server 4 and the chat server 5 are respectively installed by a plurality of companies, but, for the convenience of the description here, it is assumed that the email server 4 and the chat server 5 are connected to only one network 6. In addition, a spontaneous question by a participant JS and an answer thereto are assumed to be asked by transmitting and receiving messages via the email server 4 or the chat server 5. Note that questions and answers may be directly transmitted to and received from the participant management server 1.

Each participant terminal 3 is a terminal that is used by a participant JS. This terminal is, for example, an information processing device such as a PC, a tablet PC, or a smartphone. Similarly to the person-in-charge terminal 2, the type thereof is not limited in particular.

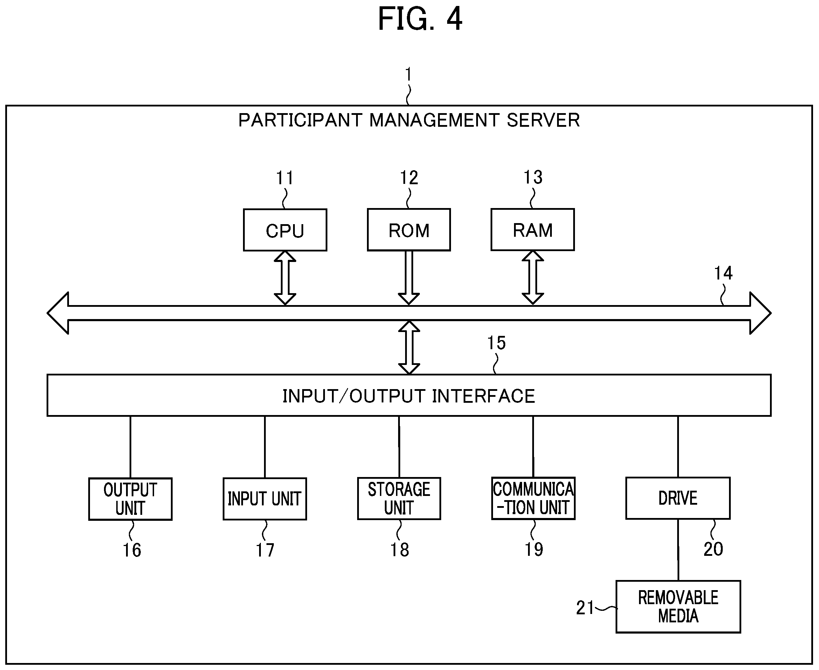

FIG. 4 is a block view that illustrates an example of a hardware configuration of the participant management server according to one embodiment of the information processing device according to the present invention. Next, referring to FIG. 4, description is given in detail regarding an example of a hardware configuration of an information processing device that can be used as the participant management server 1. Note that this configuration example is an example, and a hardware configuration of an information processing device that can be used as the participant management server 1 is not limited thereto.

As illustrated in FIG. 4, the participant management server 1 is provided with a CPU (Central Processing Unit) 11, a ROM (Read-Only Memory) 12, a RAM (Random-Access Memory) 13, a bus 14, an input/output interface 15, an output unit 16, an input unit 17, a storage unit 18, a communication unit 19, and a drive 20.

The CPU 111, for example, realizes various processing by executing a program that is recorded in the ROM 12 and/or a program that is loaded into the RAM 13 from the storage unit 18. A program that is loaded into the RAM 13 from the storage unit 18 includes, for example, an OS (Operating System) and various application programs that operate on the OS. The various application programs include one or more application programs that have been developed in order to cause the information processing device to function as the participant management server 1. This developed application program is referred to below as a "developed application".

Data or the like that is necessary for the CPU 11 to execute various processing is also stored in the RAM 13, as appropriate. This data also includes various programs that the CPU 11 executes. The various programs are read out into the RAM 13, and executed by the CPU 11.

The CPU 11, the ROM 12, and the RAM 13 are mutually connected via the bus 14. The input/output interface 15 is also connected to this bus 14. The output unit 16, the input unit 17, the storage unit 18, the communication unit 19, and the drive 20 are connected to the input/output interface 15.

The output unit 16 has a configuration that includes a liquid-crystal display or other type of display, for example. Under control by the CPU 11, the output unit 16 displays various images or various screens. The output unit 16 may be equipped in the participant management server 1 or may be connected thereto if necessary. As a result, the output unit 16 is not an essential component.

The input unit 17, for example, has a configuration that includes, inter alia, various hardware buttons, such as a keyboard. This configuration may include one or more pointing devices such as a mouse. An operator can input various items of information via the input unit 17. The input unit 17 may also be equipped in the participant management server 1 or may be connected thereto if necessary. As a result, the input unit 17 is also not an essential component.

The storage unit 18 is, for example, an auxiliary storage device such as a hard disk device or an SSD (Solid-State Drive). Large-volume data is stored in the storage unit 18. The communication unit 19 is a communication device, for example. The communication unit 19 enables communication with the person-in-charge terminal 2 as well as communication with each participant terminal 3, the email server 4, and the chat server 5 via the network 6. Note that communication with the person-in-charge terminal 2 and communication via the network 6 may be possible using different communication units 19. As a result, a plurality of communication units 19 may be equipped.

The drive 20 is a device to which removable media 25 such as a magnetic disk, an optical disc, a magneto-optical disk, or a semiconductor memory card can be attached and detached from. The drive 20, for example, enables reading of information from the removable media 25 that has been mounted, as well as writing of information to the removable media 25. As a result, a program that is recorded in the removable media 25 can be stored in the storage unit 18 via the drive 20. In addition, the removable media 25 mounted to the drive 20 can be used as a copy destination or a movement destination for various items of data stored in the storage unit 18.

The developed application is developed by envisioning that an information processing device is caused to function as the participant management server 1. This developed application may be distributed by being recorded to the removable media 25. It may be that distribution can be via the network 6. Therefore, a recording medium on which the developed application is recorded may be equipped in or mounted to an information processing device that is directly or indirectly connected to the network 6 or equipped in or mounted to an external device that can be accessed.

Hardware resources that the participant management server 1 is provided with are controlled by various programs including application programs. As a result, the information processing device functions as the participant management server 1 that can manage the participants JS and communicates with the person-in-charge terminal 2, each participant terminal 3, the email server 4, the chat server 5, or the like, if necessary.

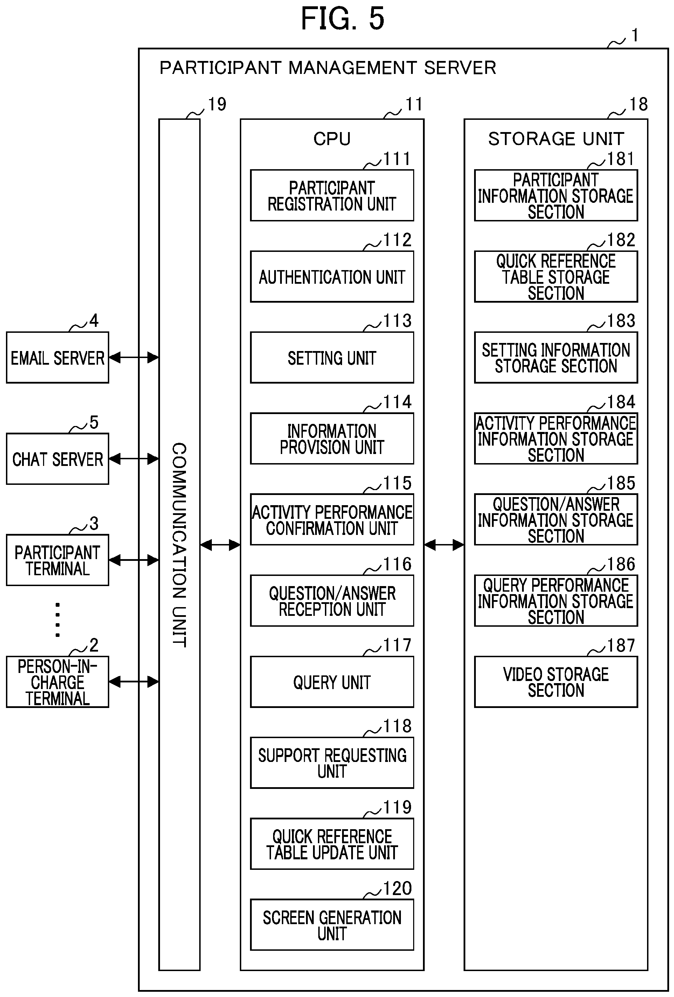

FIG. 5 is a functional block view that illustrates an example of a functional configuration that is realized by the participant management server according to one embodiment of the information processing device according to the present invention. Next, with reference to FIG. 5, description is given in detail regarding an example of a functional configuration that is realized in the participant management server 1.

As a functional configuration, a participant registration unit 111, an authentication unit 112, a setting unit 113, an information provision unit 114, an activity performance confirmation unit 115, a question/answer reception unit 116, a query unit 117, a support requesting unit 118, a quick reference table update unit 119, and a screen generation unit 120 are realized by the CPU 11 in the participant management server 1, as illustrated in FIG. 5. Via the communication unit 19, the CPU 11 transmits and receives data to and from various information processing devices, including the person-in-charge terminal 2.

This is realized by the CPU 11 executing various programs, including developed applications. As a result, a participant information storage section 181, a quick reference table storage section 182, a setting information storage section 183, an activity performance information storage section 184, a question/answer information storage section 185, a query performance information storage section 186, and a video storage section 187 are reserved for information storage in the storage unit 18.

A person desiring to participate in a lecture needs to register as a participant JS. The participant registration unit 111 supports registration of a participant JS. For example, in accordance with an instruction from a participant terminal 3, the participant registration unit 111 saves, in the participant information storage section 181 that is reserved in the storage unit 18, various items of participant information that includes personal information of the participant JS, a participant ID (IDentifier) that is identification information, a lecture ID, and authentication information.

The lecture ID is identification information that unambiguously represents a lecture that is provided. A unique lecture ID is allocated to a lecture that is provided. It is assumed here, for the convenience of the description, that there is only one lecture that is provided. As a result, it is assumed that only one quick reference table NA is present. Note that, for example, the lecture ID is, together with the participant ID, automatically added to the participant information by the participant registration unit 111.

The personal information, for example, includes an address, full name, gender, telephone number, as well as at least one of an email address and a mention name, for example. Such information is included in the personal information, whereby it is possible to identify a participant JS who has transmitted a question by email or by message, and it is possible to contact the participant JS by telephone.

The authentication unit 112 performs authentication for confirming whether a person who has caused a terminal to access the participant management server 1 is a participant JS. For the purpose of this authentication, the authentication unit 112, for example, supports causing a login screen to be transmitted to the screen generation unit 120 and receiving an authentication request that includes authentication information that has been inputted to the login screen. In a case where an authentication request is received, the authentication unit 112 identifies participant information that includes authentication information that matches the authentication information included in the authentication request to thereby confirm whether the person who caused the authentication request to be transmitted is a participant JS. Using such authentication, correspondence between the participant JS and a participant terminal 3 that the participant JS uses is also identified.

The setting unit 113 enables various settings. The setting unit 113 also supports registration of a quick reference table NA. The quick reference table NA is stored in the quick reference table storage section 182 that is reserved in the storage unit 18. Various items of setting information that correspond to setting content are stored in the setting information storage section 183 that is reserved in the storage unit 18. Registration of various settings and the quick reference table NA is, for example, performed by a person (referred to as an "administrator" below) who has privileges for both.

The various settings include, inter alia, conditions that should be satisfied in order to transmit each of a progress confirmation message and a reminder message, and timings at which the progress confirmation message and reminder message should be transmitted. Information representing a condition for transmitting a progress confirmation message and a transmission timing thereof is differentiated by being referred to below as "progress confirmation message setting information". Information representing a condition for transmitting a reminder message and a transmission timing thereof is differentiated by being referred to below as "reminder message setting information".

Present in the progress confirmation message information is, for example, time period information that represents a permitted time period in which there is no need to be able to confirm an action by the participant JS, timing information that represents a timing for transmitting a progress confirmation message transmitted to the participant JS after the permitted time period has elapsed (a confirmation target participant JS), configuration information that represents a message configuration that includes an input unit, or the like. The permitted time period represented by the time period information is approximately one week, for example. The timing represented by the timing information is a timing at which the permitted time period elapses or an arbitrarily defined timing that is at or after this timing, for example. This is similar for reminder message information, for example.

In contrast, present in the reminder message information is, for example, time period information that represents a confirmation time period for confirming a reply to a progress confirmation message, timing information that represents a timing for transmitting a reminder message transmitted to a participant JS for whom the confirmation time period has elapsed (a reminder target participant JS), configuration information that represents a message configuration that includes an answer section, or the like.

The information provision unit 114 performs processing for providing a quick reference table NA that has been requested from a participant terminal 3, or a document that is presented in the quick reference table NA. The quick reference table NA is provided in the form of a download, for example, and the document is provided by being disposed on a screen (for example, a web page) transmitted by the screen generation unit 120, for example. A document presented by the quick reference table NA is assumed to be a video. In the case of a video, the screen generation unit 120 will transmit, to the participant terminal 3, a screen in which a display area for video playback is disposed. In addition, the information provision unit 114 supports streaming or the like, for example. Videos that are assumed to be viewed by participants JS are stored in the video storage section 187, which is reserved in the storage unit 18. As a result, a URL affixed to a link button for a document name present in the quick reference table NA is a storage location for a video to which the document name has been allocated.

In the present embodiment, it is assumed that, while a participant JS who performs an action following the quick reference table NA is proceeding with actions (processes), some kind of issue that the participant JS desires to confirm will arise and the participant JS will ask a question. The question along with the answer thereto is assumed to be made by transmitting and receiving emails via the email server 4, or by transmitting and receiving messages (direct messages) via the chat server 5. An email for a question defines an address that is a destination, and a message defines a mention destination. Under such assumptions, the activity performance confirmation unit 115, for example, accesses the email server 4 and obtains an email for which a defined address is set as a destination. With the chat server 5, the chat server 5 is similarly accessed, and a message for which a defined mention name is set as a destination is obtained. In this manner, the activity performance confirmation unit 115, upon being able to obtain the email or message, confirms the transmission source of the email or message that the activity performance confirmation unit 115 was able to have obtained, and also confirms the participant JS from the confirmed transmission source. Assuming that the confirmed participant JS has asked a question, activity performance information is generated and stored in the activity performance information storage section 184 that is reserved in the storage unit 18.

This activity performance information includes the current date and time and the participant ID, for example. The participant ID is extracted from the participant information in which the transmission source is included as a portion of the personal information. By saving such activity performance information, it is possible to confirm the date and time at which the participant JS last spontaneously asked a question.

Note that the quick reference table NA presents documents (videos) that will serve as references. Therefore, viewing of such a document may be treated as an action that is spontaneously performed by the participant JS. In this case, activity performance information that includes the viewing date and time, the document name, or the like may be stored. In a case of also storing such activity performance information, it becomes possible to estimate progress by the participant JS with higher accuracy.

The question/answer reception unit 116 performs processing for requesting the person in charge TS to answer in a case where, for example, an email or a message is obtained by the activity performance confirmation unit 115. Processing for receiving an answer created by the person in charge TS due to the request, and transmitting the answer to the participant JS that asked the question is also performed. Stored in the question/answer information storage section 185 reserved in the storage unit 18 are, as question information, an email (the body thereof) or a message that is transmitted for the purpose of the question and, as answer information, the answer created by the person in charge TS. In order to be able to associate the question information and the answer information, for example, it may be that identification information is allocated and added to the question, and the person in charge TS is caused to transmit an answer that includes this identification information. This identification information is referred to below as a "question ID". Note that, as described above, an answer can be created as a video, audio, or the like, in addition to text. Regardless of what type of information the answer is, it is sufficient if the answer information is stored in the question/answer information storage section 185.

The query unit 117, if necessary, transmits progress confirmation messages and reminder messages. In a case of having generated and transmitted a progress confirmation message or a reminder message, the query unit 117 generates query performance information and stores the generated query performance information in the query performance information storage section 186 that is reserved in the storage unit 18. Note that transmitted progress confirmation messages and reminder messages are both received by the participant terminal 3 via the email server 4.

This query performance information is an information group that represents, for example, the current date and time (transmission date and time), a message type, a participant ID, a transmission destination address, the presence or absence of a reply, reply content, or the like. The message type represents progress confirmation message or reminder message. Such query performance information is saved for each participant JS, whereby support that corresponds to either the transmitted message being a progress confirmation message or a reminder message becomes possible. Accordingly, in addition to progress confirmation message information and reminder message information, the query unit 117 refers to activity performance information and query performance information. As a result, the query unit 117 can identify a participant JS to whom a progress confirmation message should be transmitted, as described above, and sequentially transmit, to the identified participant JS, a progress confirmation message and a reminder message having configurations that are set together.

The transmission source of the progress confirmation message and the reminder message are caused to differ from the transmission destination of the question that the participant JS spontaneously asked. As a result, the query unit 117 accesses the email server 4, and obtains an email that employs this transmission source as a transmission destination, in other words, a reply. In a case where this email could be obtained, the query unit 117 identifies whether the message to which this email is a reply to is a progress management message or a reminder message. For example, this identification can be performed in accordance with whether the reply includes an input unit. In a case where a reminder message is identified, the query unit 117 also confirms the presence or absence of a question inputted to the answer section and, upon confirming that a question is "present", passes the email to the question/answer reception unit 116 and requests processing. As a result, the question/answer reception unit 116 processes the question that is in the reply to the reminder message, and requests the person in charge TS to create an answer.

In a case where an email could be obtained, the query unit 117 identifies, from the transmission source address and message that became the reason for the transmission of the email, query performance information that should be updated, and updates the presence or absence of a reply included therein from "absence" to "presence". Due to this update, it becomes possible to determine the presence or absence of replies to progress confirmation messages and reminder messages. The reply content in identified query performance information is also updated.

The support requesting unit 118 refers to query performance information for a reminder message and identifies a reminder message for which a reply within the setting time period could not be confirmed after the reminder message is caused to be transmitted. In a case where such a reminder message is able to be identified, the support requesting unit 118 makes a notification to that effect to the person in charge TS, and performs processing for requesting support for the participant JS who has not made a reply to the reminder message.

The request to support the participant JS may be performed by transmitting an email, or may be performed by causing a person-in-charge terminal 2 that is allowed to access the participant management server 1 to display a message or the like. In light of these circumstances, a method of making a request to the person in charge TS is not limited in particular. In a case of making a request to the person in charge TS, it is desirable for the support requesting unit 118 to extract a telephone number from the participant information for the identified participant JS, and present the extracted telephone number to the person in charge TS. In addition, in order to be able to identify whether contact by telephone was able to be performed, it may be possible to update the presence or absence of a reply in query performance information from "absence" to "presence" in a case where contact by telephone was able to be performed.

A question asked by a participant JS and the answer to the question are saved in the question/answer information storage section 185 as question information and answer information. The quick reference table update unit 119, automatically or due to an instruction from a person in charge TS, identifies information that is from among a group of question information and answer information saved in the question/answer information storage section 185 and should be added to the quick reference table NA, and adds the information to the quick reference table NA. The quick reference table NA, which has been updated due to such an addition, is, for example, subsequently handled as a target for transmission by the information provision unit 114. Due to such an update, the quick reference table NA becomes more user-friendly for the participant JS. Note that it is possible to use a natural language processing technique to identify a group of question information and answer information that should be added to the quick reference table NA.

In the example of a functional configuration as described above, the query unit 117 corresponds to a query unit, a reminding unit, and a reception unit in the present embodiment. The support requesting unit 118 corresponds to a notification processing unit in the present embodiment. The activity performance confirmation unit 115 corresponds to a presence/absence determination unit in the present embodiment. The question/answer reception unit 116 corresponds to a request processing unit and an answer information obtainment unit in the present embodiment.

The quick reference table update unit 119 associates question information and answer information, saves the question information and answer information in a form that is added to the quick reference table NA, and thus corresponds to a saving control unit in the present embodiment. In addition, a progress confirmation message corresponds to a message in the present embodiment, a reminder message corresponds to another message in the present embodiment, and a question that the participant JS spontaneously asks corresponds to a separate question in the present embodiment.

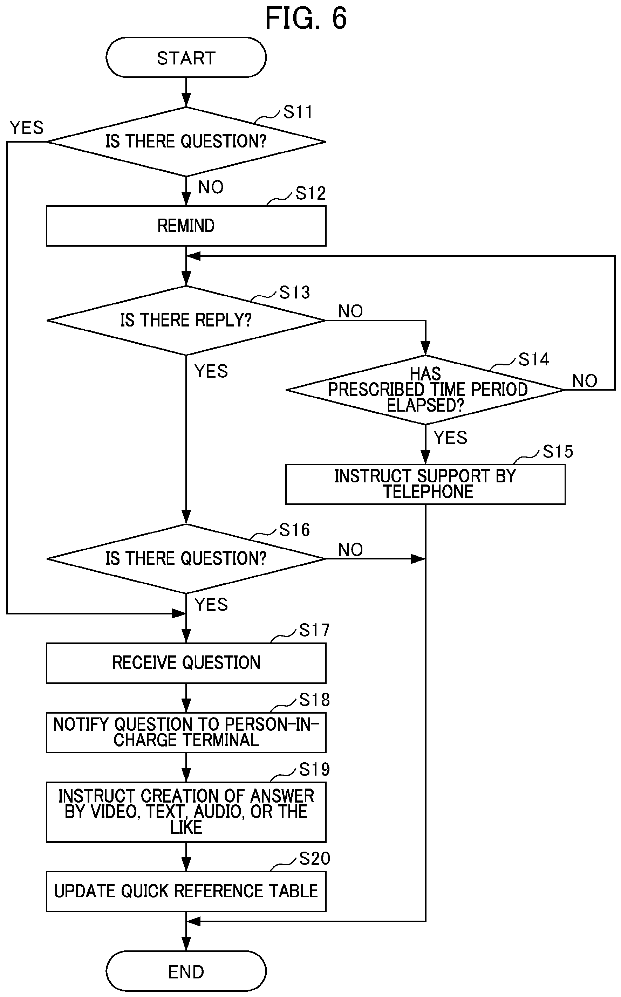

FIG. 6 is a flow chart that illustrates an example of reminder message transmission support processing. This processing is a result of consolidating a flow for a series of processing that is performed in order to transmit a reminder message when the timing for transmitting the reminder message has arrived. It is realized by the CPU 11 executing the above-described developed application. In order to facilitate understanding, the flow for the series of processing is represented while focusing on one participant JS. Next, referring to FIG. 6, description is given in detail regarding this processing. It is assumed that the CPU 11 is the agent that executes the processing.

Firstly, in step S11, the CPU 11 determines whether there is a question has been asked by a targeted participant JS. In a case where the targeted participant JS has asked a question by email or by a message within the setting time period, the determination in step S11 becomes YES, and step S17 is transitioned to. In a case where the participant JS has not asked a question within the setting time period, the determination in step S11 becomes NO, and step S12 is transitioned to. Note that, determination processing in step S11 is performed by referring to the activity performance information stored in the activity performance information storage section 184.

In step S12, the CPU 11 generates a reminder message for which the email address for the participant JS is set as a transmission destination, causes the reminder message to be transmitted, generates query performance information, and stores the query performance information in the query performance information storage section 186. Subsequently, in step S13, the CPU 11 determines whether there is a reply to the reminder message. In a case of being able to obtain the reply from the email server 4, the determination in step S13 becomes YES, the corresponding query performance information is updated, and subsequently step S16 is transitioned to. In a case of not being able to obtain a reply from the email server 4, the determination in step S13 becomes NO, and step S14 is transitioned to.

In step S14, the CPU 11 refers to the stored query performance information and determines whether a prescribed time period (the another setting time period) after the transmission of the reminder message has elapsed. In a case where the prescribed time period has elapsed, the determination in step S14 becomes YES, and step S15 is transitioned to. In a case where the prescribed time period has not elapsed, the determination in step S14 becomes NO, and the above-described step S13 is returned to. As a result, confirmation is performed for whether the prescribed time period has elapsed after a reminder message is transmitted, or the presence or absence of a reply in the duration until there is a reply.

In step S15, the CPU 11 performs processing for instructing the person in charge TS to support the participant JS by telephone. After execution of this processing ends, the reminder message transmission support processing ends.

In step S16, which is transitioned to after the determination in the above-described step S13 is YES, the CPU 11 determines whether there is a question in the reply. In a case where the answer section in the reply indicates the "presence" of a question, the determination in step S16 becomes YES, and step S17 is transitioned to. In a case where the answer section in the reply indicates the "absence" of a question, the determination in step S16 becomes NO, and the reminder message transmission support processing ends.

In step S17, the CPU 11 receives the question that is in the reply. Next, in step S18, the CPU 11 performs processing for notifying the received question to the person-in-charge terminal 2. In step S19 that is transitioned to next, the CPU 11 performs processing for instructing the person in charge TS to create an answer using video, text, audio, or the like. After this processing is executed, step S20 is transitioned to, and the CPU 11 performs processing for updating the quick reference table NA by, for example, storing question information to the question, answer information storage section 185. Subsequently, the reminder message transmission support processing ends.

A question asked by the participant JS during the setting time period is processed as needed. In a case where there is a question that should be processed, the determination in step S11 becomes YES, step S17 is transitioned to, and the question is processed. In contrast, in a case where there is no question that should be processed, the determination in step S11 becomes YES, and the reminder message transmission support processing ends.

In processing that corresponds to transmission of a progress confirmation message, processing that is essentially similar to that of steps S11 to S14 described above is executed. However, in step S12, a progress management message is transmitted instead of a reminder message. Therefore, detailed description of processing that corresponds to transmission of a progress confirmation message is omitted.

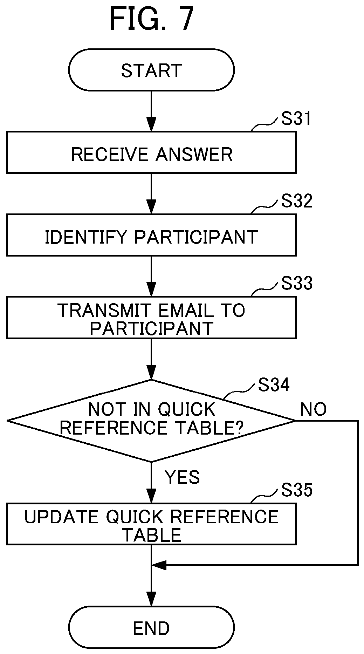

FIG. 7 is a flow chart that illustrates an example of answer reception processing. This processing is for supporting an answer that is created by a person in charge TS due the person in charge TS being instructed to create the answer. For example, it is executed due to the obtainment of an answer created by the person in charge TS. It is realized by the CPU 11 executing the developed application, similarly to with the reminder message transmission support processing described above. Next, referring to FIG. 7, description is given in detail regarding this processing. It is also assumed that the CPU 11 is the agent that executes the processing.

Firstly, in step S31, the CPU 11 receives an answer that is transmitted from the person-in-charge terminal 2 and is directly or indirectly received by the participant management server 1. In step S32 that is transitioned to next, the CPU 11 refers to question information that uses the question ID in the answer to thereby identify the participant JS who caused the question to be transmitted. After identification of the participant JS, step S33 is transitioned to and the CPU 11 creates an email in which the email address of the identified participant JS is set as a destination, and causes the email to be transmitted. Subsequently, step S34 is transitioned to.

In a case where the answer is created using video, audio, or the like, this is, for example, attached to the email as an attachment. In a case where the answer is text, this text is inserted into the body of the email. Regardless of whether the answer is a video, audio, text, or the like, the answer is stored in the question/answer information storage section 185 as answer information.

In step S34, the CPU 11 determines whether the received answer and the question for which the answer was obtained are not in the quick reference table NA. For example, in a case where there is nothing among questions and answers that have been added to the quick reference table NA in the past that is similar, content-wise, to the current question and answer, the determination in step S34 becomes YES and step S35 is transitioned to. In a case where there is something that is similar, content-wise, the determination in step S34 becomes NO, and the answer reception processing ends here.

In step S35, the CPU 11, for example, updates the quick reference table NA by adding the current question and answer to a position on the quick reference table NA that is instructed by the person in charge TS or is estimated in consideration of a document that the participant JS has viewed. After the update, the answer reception processing ends.

Note that the number of times that the progress confirmation message and the reminder message are transmitted is set to one for each in the present embodiment, but the number of times that the progress confirmation message and reminder message are transmitted may be set to two or more. In addition, a message that is transmitted in order to confirm, inter alia, the status of the participant JS does not need to be limited to the two types that are progress confirmation messages and reminder messages. In other words, it may be that a separate message is caused to be transmitted before the progress confirmation message is transmitted or in the duration from after a progress confirmation message is caused to be transmitted and until a reminder message is transmitted.

In addition, progress confirmation messages and reminder messages are both transmitted in the form of emails in the present embodiment, but may be transmitted by using an SNS. It may be that email and one or more SNSs are used to transmit a plurality of times at once. In light of these circumstances, how to transmit progress confirmation messages and reminder messages is not limited in particular. In addition, the configuration of each message is also not limited in particular. For example, in addition to the input unit in a progress confirmation message, one or more other input units for queries may be added.

Updating the quick reference table NA is performed in the form of adding a question from a participant JS as well as an answer to the question. This is so that, upon viewing the quick reference table NA, a participant JS can more easily obtain a larger amount of useful information. However, in a case where there is a large number of questions from the participant JS, the possibility that the quick reference table NA becomes difficult to view can also be considered. Therefore, in a case where there has arisen a question and an answer thereto that will serve as candidates to add to the quick reference table NA, it may be that the importance thereof is compared with that of a question and answer thereto that have already been added, and whether to add the candidates to the quick reference table NA is determined in accordance with a result of the comparison. As a result, in a case where adding the candidates is determined, it may be that the question and answer thereto that were already added are deleted from the quick reference table NA. It may be that a question and an answer thereto can be freely viewed by each participant JS, separately from the quick reference table NA. In this case, the question/answer reception unit 116 will correspond to a saving control unit in the present embodiment.

### EXPLANATION OF REFERENCE NUMERALS

1 Information processing device (participant management server), 2 Person-in-charge terminal, 3 Participant terminal, 4 Email server, 5 Chat server, 6 Network, 11 CPU, 18 Storage unit, 19 Communication unit, 111 Participant registration unit, 112 Authentication unit, 113 Setting unit, 114 Information provision unit, 115 Activity performance confirmation unit, 116 Question/answer reception unit, 117 Query unit, 118 Support requesting unit, 119 Quick reference table update unit, 120 Screen generation unit, 181 Participant information storage section, 182 Quick reference table storage section, 183 Setting information storage section, 184 Activity performance information storage section, 185 Question/answer information storage section, 186 Query performance information storage section, 187 Video storage section, JK Human resource development service company, JS Participant, TS Person in charge.

## Claims

1. An information processing device, comprising:
a query unit configured to cause transmission of a message that includes an input unit for selecting presence or absence of progress for a prescribed process; and
a reception unit configured to receive progress information that represents the presence or absence of progress.

2. The information processing device according to claim 1, further comprising:
a reminding unit configured to cause transmission of another message that includes another input unit for selecting presence or absence of a question in a case where reception of the progress information is not performed by the reception unit within a prescribed time period after transmission of the message is caused,
wherein the reception unit can receive question presence/absence information that represents presence or absence of the question.

3. The information processing device according to claim 2, further comprising:
a notification processing unit configured to perform processing for, in a case where the reception of the question presence/absence information is not performed by the reception unit within another prescribed time period after transmission of the another message, notifying an administrator to that effect; and
a request processing unit configured to, in a case where the question presence/absence information received by the reception unit represents the presence of the question, perform processing for requesting a person in charge to answer the question represented by question information that is received by the reception unit together with the question presence/absence information.

4. The information processing device according to claim 2, further comprising:
a presence/absence determination unit configured to determine presence or absence of a separate question that is asked separately from the question in accordance with the another message,
wherein the reminding unit, based on a result of the determination by the presence/absence determination unit, causes transmission of the another message.

5. The information processing device according to claim 3, further comprising:
an answer information obtainment unit configured to obtain answer information that represents content of the answer by the person in charge; and
a saving control unit configured to cause the answer information and the question information to be associated and saved.

6. The information processing device according to claim 1, wherein
the prescribed process includes a plurality of a prescribed objective and an action that is necessary in order to achieve the prescribed objective.

7. A program for causing an information processing device to execute processing for
causing transmission of a message that includes an input unit for selecting presence or absence of progress for a prescribed process; and
causing reception of progress information that represents the presence or absence of progress.
